# EUROPEAN PATENT APPLICATION

(11) **EP 4 471 617 A1**
(43) Date of publication of application: **04.12.2024**
(21) Application number: 24178452.9
(22) Date of filing: 28.05.2024
(51) Int. Cl.: G06F 16/35, G06N 20/00, G06Q 30/0203

(54) **HYBRID MACHINE LEARNING CLASSIFIERS FOR MANAGING USER REPORTS**

(30) Priority: 31.05.2023 US 202318204048; 21.12.2023 US 202318392877
(71) Applicant: Roku, Inc., San Jose, CA 95110 (US)
(72) Inventor: MANCILLA, Jesús, San Jose, 95110 (US)
(74) Representative: Mewburn Ellis LLP

(57) **Abstract**

Disclosed herein are system, apparatus, article of manufacture, method and/or computer program product embodiments, and/or combinations and sub-combinations thereof, for managing user reports. An example embodiment operates by generating a first data set based on a list of keywords and a summary of a user report, and providing a set of data agents to a supervised machine learning classifier. A data agent can be determined for a cluster of prior report statements generated by an unsupervised machine learning clustering classifier based on one or more second data sets generated for a plurality of prior user reports, where the plurality of prior user reports is classified by the unsupervised machine learning clustering classifier into a plurality of clusters including the cluster of prior report statements. The supervised machine learning classifier can classify, based on the first data set, the user report into a database managed by the data agent.

## Description

### CROSS REFERENCE TO RELATED PATENT APPLICATIONS

This application is a continuation in part of U.S. Patent Application No. 18/204,048, entitled "Hybrid Machine Learning Classifiers For User Response Statements," filed on May 31, 2023. The entire contents of the above referenced application is incorporated by reference herein in its entirety.

### BACKGROUND

### FIELD

This disclosure is generally directed to hybrid Machine Learning classifiers to classify user reports.

### SUMMARY

Provided herein are system, apparatus, article of manufacture, method and/or computer program product embodiments, and/or combinations and sub-combinations thereof, for a hybrid Machine Learning (ML) classifier that includes both a supervised classifier and an unsupervised classifier. The hybrid classifier can be used to classifying data such as user response statements or other statements. An unsupervised machine learning clustering classifier can be used to provide a set of target words, which can be fed into a supervised machine learning classifier to classify a user response statement into a set of labels selected from the set of target words.

In some aspects, a computer-implemented method for classifying a user response statement can include generating, by at least one computer processor, a first data set based on a question statement and a user response statement provided by a user in response to the question statement. The method further includes providing a set of target words to a supervised machine learning classifier; and generating, by the supervised machine learning classifier, a set of labels selected from the set of target words for the user response statement represented by the first data set, where the set of labels includes a first label with a first probability and a second label with a second probability.

In some aspects, a target word of the set of target words can be determined by a language model for a cluster of prior user response statements generated by an unsupervised machine learning clustering classifier based on a second data set generated for a plurality of prior user response statements provided by a group of users to a set of prior question statements. The plurality of prior user response statements can be classified by the unsupervised machine learning clustering classifier into a plurality of clusters including the cluster of prior user response statements.

In some aspects, the user response statement and the plurality of prior user response statements can be user response statements to an open-ended survey question statement, and the question statement and the set of prior question statements are open-ended survey question statements. In some aspects, the user response statement, the question statement, the plurality of prior user response statements, and the set of prior question statements can include a sequence of response statements and questions obtained in a user interview.

In some aspects, the supervised machine learning classifier can include a supervised neutral network, a support vector machine (SVM) classifier, a random forest classifier, or a K nearest neighbors supervised machine learning classifier, where K is an integer.

In some aspects, the language model can include a probabilistic language model or a neural network based language model.

In some aspects, the unsupervised machine learning clustering classifier can include an Ordering Points To Identify the Clustering Structure (OPTICS) algorithm, a density-based cluster ordering algorithm, or a Density-Based Spatial Clustering of Applications with Noise (DBSCAN) algorithm. The unsupervised machine learning clustering classifier can include the OPTICS algorithm, and further include an agglomerative clustering algorithm to classify noises that the OPTICS clustering algorithm cannot classify with enough confidence.

In some aspects, the first data set can be generated by sentence embedding of the user response statement and the question statement. The sentence embedding can include SentenceBERT, Universal Sentence Encoder, FastText, or a conditional masked language modelling.

In some aspects, the second data set can be generated by word embedding for the plurality of prior user response statements and the set of prior question statements. For example, the word embedding includes Word2vec embedding. In some aspects, the word embedding can further include truncated embedding to reduce a dimensionality of the word embedding to generate the second data set.

### BRIEF DESCRIPTION OF THE FIGURES

The accompanying drawings are incorporated herein and form a part of the specification.
FIG. 1 illustrates a block diagram of a multimedia environment including a survey server to provide survey questions to users, according to some embodiments.
FIG. 2 illustrates a block diagram of a streaming media device, according to some embodiments.
FIG. 3 is a block diagram illustrating a system for classifying user response statements to survey questions by a supervised machine learning classifier and an unsupervised machine learning clustering classifier, according to some example embodiments.
FIG. 4 is a flowchart illustrating an example process for classifying user response statements to survey questions by using a supervised machine learning classifier and an unsupervised machine learning clustering classifier, according to some embodiments.
FIG. 5 illustrates a block diagram of a multimedia environment including a server for managing user reports, according to some embodiments.
FIG. 6 is a block diagram illustrating a system for managing user reports by a supervised machine learning classifier and an unsupervised machine learning clustering classifier, according to some example embodiments.
FIG. 7 is a flowchart illustrating an example process for managing user reports by using a supervised machine learning classifier and an unsupervised machine learning clustering classifier, according to some embodiments.
FIG. 8 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Machine learning (ML) and artificial intelligence (AI) are among the most significant recent technological advancements. A classifier in machine learning can be a process that orders or categorizes data into one or more of a set of "classes." A classifier can be implemented by a neural network formed by interconnected nodes or neurons in a layered structure to process data. A classifier can be a supervised classifier, an unsupervised classifier, or other type of classifier. Unsupervised machine learning classifiers are fed only unlabeled datasets, which they classify according to pattern recognition or structures and anomalies in the data. Supervised classifiers are fed training datasets, from which they learn to classify data according to predetermined categories. However, a supervised classifier needs a very clear training process. In addition, if a class is not represented in the training data, the class is difficult to be recognized. And an unsupervised machine learning classifier cannot estimate or map the outcome of an individual sample. In the presence of outliers, the outcome produced by an unsupervised machine learning classifier can vary greatly. Therefore, it is desirable to improve the functionalities of both supervised classifiers and unsupervised classifiers.

Provided herein are system, apparatus, device, method and/or computer program product embodiments, and/or combinations and sub-combinations thereof, for a hybrid Machine Learning classifier that includes both a supervised classifier and an unsupervised classifier. The hybrid classifier can be used to classifying data such as user response statements or other statements. An unsupervised machine learning clustering classifier can be used to provide a set of target words, which can be fed into a supervised machine learning classifier to classify a user response statement into a set of labels selected from the set of target words. In some aspects, the survey questions may be related to providing media content to users.

Provided herein are system, apparatus, device, method and/or computer program product embodiments, and/or combinations and sub-combinations thereof, for a hybrid Machine Learning classifier that includes both a supervised classifier and an unsupervised classifier. The hybrid classifier can be used to classifying data such as user reports, where a user report can contain many report statements. In some aspects, a user report can contain thousands of words, or even millions of words, and can be larger than a user response statement that can often be less than 50 words or 100 words. The increased size of a user report imposes more complexity and challenges beyond what can be handled by a supervised classifier or an unsupervised classifier for user response statements or other statements. In some aspects, an unsupervised classifier can also be referred to as an unsupervised machine learning clustering classifier.

In some aspects, an unsupervised machine learning clustering classifier can be used to provide a set of data agents, which can be coupled to a supervised machine learning classifier to classify a user report. The supervised machine learning classifier can determine that the user report is classified into a database managed by a data agent among the set of data agents.

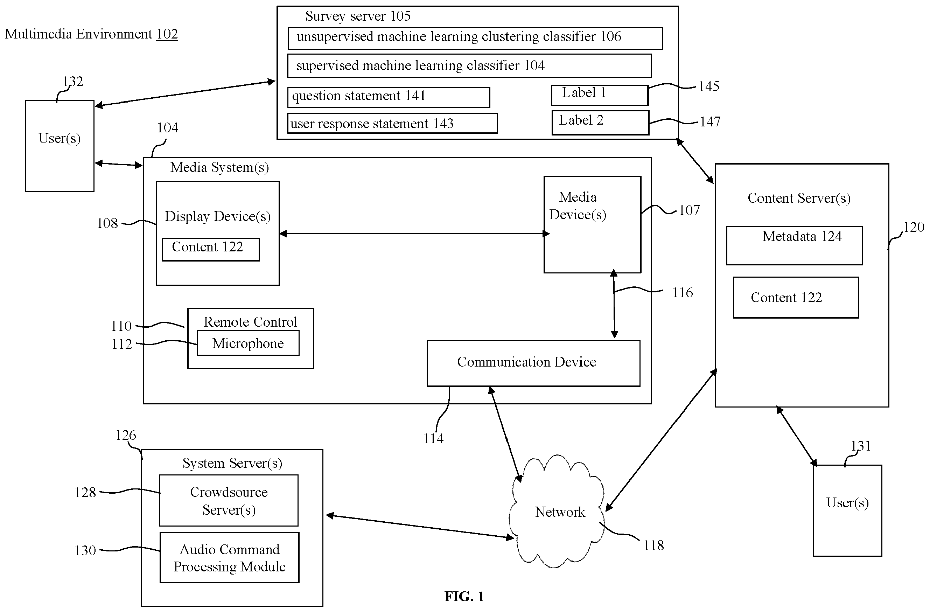

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### First Multimedia Environment

FIG. 1 illustrates a block diagram of a multimedia environment 102 including a survey server to provide survey question statements to users, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. Users 132 may operate with the media system 104 to select and consume content, such as media content 122, which may also be referred to as a content item.

Each media system 104 may include one or more media devices 107 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 107 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some aspects, media device 107 can be a part of, integrated with, operatively coupled to, and/or connected to its respective display device 108.

Each media device 107 may be configured to communicate with network 118 via a communication device 114. The communication device 114 may include, for example, a cable modem, a cellular modem, a WiFi modem, any other wireless modem, or satellite TV transceiver. The media device 107 may communicate with the communication device 114 over a link 116, wherein the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 107 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 107 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include multiple content items, which may be any combination of music, videos, movies, TV programs, multimedia, images, still pictures, text, graphics, gaming applications, advertisements, programming content, public service content, government content, local community content, software, and/or any other content or data objects in electronic form.

In some aspects, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

In some aspects, content server 120 may also store information about the community of users 131, which can include user(s) 132.

In some aspects, the multimedia environment 102 may include a survey server 105 that can interact with user 132 or the community of users 131 through an application software operated by survey server 105, such as a web browser. Survey server 105 can provide a question statement 141 and collect a user response statement 143, where user response statement 143 is provided by user 132 in response to question statement 141. Question statement 141 may be simply referred to as a question. In some aspects, user response statement 143 and question statement 141 can be related to providing content 122 to user 132 through multimedia environment 102. Survey server 105 can be different from content server 120, and can be operated by different owners. In addition, survey server 105 can generate, using a supervised machine learning classifier 104, a set of labels selected from a set of target words for user response statement 143 represented by a data set, where the set of labels includes a first label 145 with a first probability and a second label 147 with a second probability. The first label 145 and the second label 147 can be selected from a set of target words determined by a language model for a cluster of prior user response statements generated by an unsupervised machine learning clustering classifier 106.

The multimedia environment 102 may include one or more system servers 126. The system servers 126 may operate to support the media devices 107 from the cloud. It is noted that the structural and functional aspects of the system servers 126 may wholly or partially exist in the same or different ones of the system servers 126.

The media devices 107 may exist in thousands or millions of media systems 104. Accordingly, the media devices 107 may lend themselves to crowdsourcing embodiments and, thus, the system servers 126 may include one or more crowdsource servers 128.

For example, using information received from the media devices 107 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streaming of the movie.

The system servers 126 may also include an audio command processing module 130. As noted above, the remote control 110 may include a microphone 112. The microphone 112 may receive audio data from users 132 (as well as other sources, such as the display device 108). In some aspects, the media device 107 may be audio responsive, and the audio data may represent verbal commands from the user 132 to control the media device 107 as well as other components in the media system 104, such as the display device 108.

In some aspects, the audio data received by the microphone 112 in the remote control 110 is transferred to the media device 107, which is then forwarded to the audio command processing module 130 in the system servers 126. The audio command processing module 130 may operate to process and analyze the received audio data to recognize the verbal command of user 132. The audio command processing module 130 may then forward the verbal command back to the media device 107 for processing.

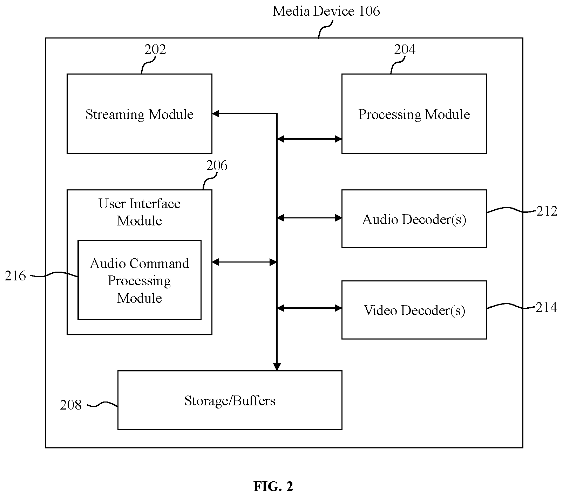

In some aspects, the audio data may be alternatively or additionally processed and analyzed by an audio command processing module 216 in the media device 107 (see FIG. 2). The media device 107 and the system servers 126 may then cooperate to pick one of the verbal commands to process (either the verbal command recognized by the audio command processing module 130 in the system servers 126, or the verbal command recognized by the audio command processing module 216 in the media device 107).

FIG. 2 illustrates a block diagram of an example media device 107, according to some embodiments. Media device 107 may include a streaming module 202, processing module 204, storage/buffers 208, and user interface module 206. As described above, the user interface module 206 may include the audio command processing module 216.

The media device 107 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, HEV, MPEG1, MPEG2, MPEG-TS, MPEG-4, Theora, 3GP, DV, DVCPRO, DVCPRO, DVCProHD, IMX, XDCAM HD, XDCAM HD422, H.265, AV1, and/or XDCAM EX, to name just some examples.

Now referring to both FIGS. 1 and 2, In some aspects, the user 132 may interact with the media device 107 via, for example, the remote control 110. For example, the user 132 may use the remote control 110 to interact with the user interface module 206 of the media device 107 to select content, such as a movie, TV show, music, book, application, game, etc. The streaming module 202 of the media device 107 may request the selected content from the content server(s) 120 over the network 118. The content server(s) 120 may transmit the requested content to the streaming module 202. The media device 107 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 107 may store the content received from content server(s) 120 in storage/buffers 208 for later playback on display device 108.

### Classifying user response statements to survey questions

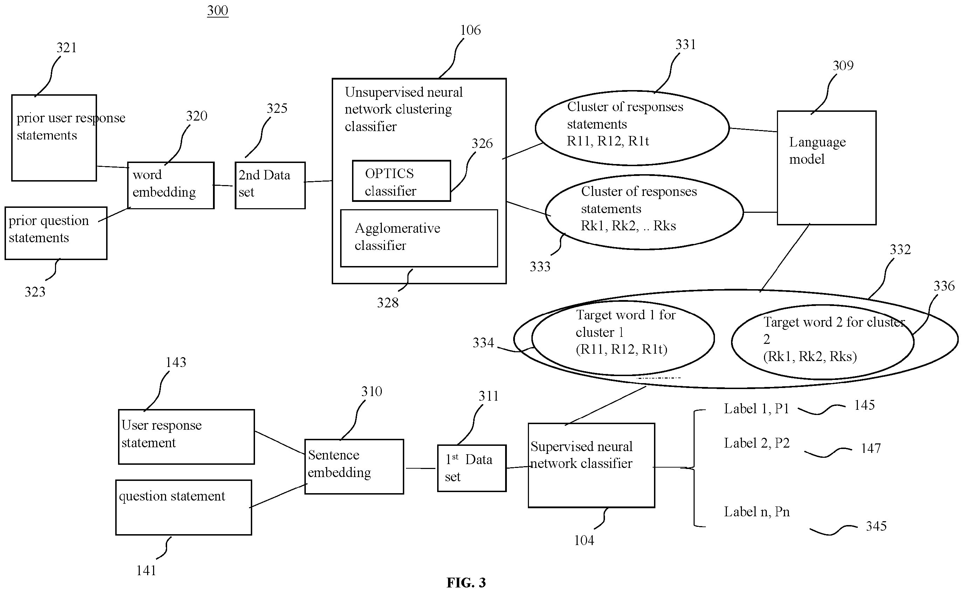

FIG. 3 is a block diagram illustrating a system 300 operated by a server for classifying user response statements to survey questions by using a supervised machine learning classifier and an unsupervised machine learning clustering classifier, according to some example embodiments. System 300 may be operated by survey server 105 to provide question statement 141 and collect user response statement 143, where user response statement 143 is provided by user 132 in response to question statement 141. In addition, survey server 105 can generate, using supervised machine learning classifier 104, a set of labels selected from a set of target words for user response statement 143 represented by a data set, where the set of labels includes a first label 145 with a first probability and a second label 147 with a second probability. The first label 145 and the second label 147 are selected from a set of target words 332 determined by a language model 309 for a cluster of prior user response statements 331 generated by unsupervised machine learning clustering classifier 106.

In some aspects, supervised machine learning classifier 104 and unsupervised machine learning clustering classifier 106 are machine learning based classifier. Accordingly, such machine learning based classifiers cannot be performed by hand or using a mental process. Both supervised machine learning classifier 104 and unsupervised machine learning clustering classifier 106 can recognize patterns, either by relying on previous experience (e.g., supervised machine learning classifier 104), or without any a priori knowledge of the system itself (e.g., unsupervised machine learning clustering classifier 106). However, supervised machine learning classifier 104 alone needs very clear training process, while the unrepresented place in training data is difficult to be recognized by supervised machine learning classifier 104. Unsupervised machine learning clustering classifier 106 alone cannot estimate or map the outcome of an individual sample. In the presence of outliers, the outcome produced by unsupervised machine learning clustering classifier 106 can vary greatly. Therefore, by combining supervised machine learning classifier 104 and unsupervised machine learning clustering classifier 106 together, system 300 can improve the functionality of either supervised machine learning classifier 104 or unsupervised machine learning clustering classifier 106 if used alone. In some aspects, supervised machine learning classifier 104 or unsupervised machine learning clustering classifier 106 can be implemented by a neural network having multiple layers, such as an input layer, a hidden layer, and an output layer. In some aspects, supervised machine learning classifier 104 or unsupervised machine learning clustering classifier 106 can be implemented by custom hardware, or a combination of hardware and software. System 300 can improve the functionality of either supervised machine learning classifier 104 or unsupervised machine learning clustering classifier 106 so that they can be used to classify many kinds of data. The use of system 300 to classify user response statement 143 to question statement 141 is only presented as an example of applications for system 300.

In some aspects, question statement 141 can be an open-ended survey question statement. In general, a survey question statement can be an open-ended survey question statement or a closed or fixed response question. For example, a survey question can be a yes or no, a true or false question, a multiple choice question, a rating scale question, or a ranking question, which are examples of closed or fixed response question. An open-ended survey question can be a general sentence, such as "what is your favorite color"? "What is your opinion about the interest rate increase"? An open-ended survey question can solicit free style answers from a user, which can potentially contain more information. However, it is important to be able to accurately and efficiently analyze user response statement 143 provided by user 132 in response to question statement 141.

In practice, in the process of classifying user response statements to survey questions, tagging or labeling the open-ended survey questions and the user response statements can be performed by using supervised machine learning classifier 104 or unsupervised machine learning clustering classifier 106 alone. However, supervised machine learning classifier 104 alone needs very clear training process, while the unrepresented place in training data is difficult to be recognized by supervised machine learning classifier 104. Unsupervised machine learning clustering classifier 106 alone cannot estimate or map the outcome of an individual sample. In some aspects, the open-ended survey questions and the user response statements can be converted into word embedding. Afterwards, unsupervised clustering algorithms can be used to create clusters of the responses. In addition, a language model, such as GPT3.5, can be used to generate a set of target words or labels using an off-the-shelf text generator. An additional classifier, such as supervised machine learning classifier 104, can receive as input the sentence embedding of the question statement 141 concatenated with user response statement 143, and generate the top-n labels, such as the first label 145 and the second label 147, for user response statement 143. Accordingly, the use of word embedding with unsupervised machine learning clustering classifier 106 and the use of sentence embedding with supervised machine learning classifier 104 is a specific combination that can improve the functionality of the known techniques by using supervised machine learning classifier 104 or unsupervised machine learning clustering classifier 106 alone.

In some aspects, a first data set 311 is generated by applying sentence embedding 310 on question statement 141 and user response statement 143 provided by user 132 in response to question statement 141. A set of target words 332 and the first data set 311 are provided to supervised machine learning classifier 104. Supervised machine learning classifier 104 can generate a set of labels selected from the set of target words 332 for user response statement 143 represented by the first data set 311, where the set of labels includes a first label 145 with a first probability P1, a second label 147 with a second probability P2. Other additional labels can be generated as well, such as a label 345 with a third probability Pn.

In some aspects, a target word of the set of target words, such as a target word 334 or a target word 336, can be determined by language model 309. Target word 334 can be determined for a cluster 331 of prior user response statements that may include a user response statement R11, a user response statement R12, ... or a user response statement R1t; and target word 336 can be determined for a cluster 333 of prior user response statements that may include a user response statement Rk1, a user response statement Rk2, ... or a user response statement Rks. Language model 309 can be a probabilistic language model or a neural network based language model.

Cluster 331 of prior user response statements, such as user response statement R11, user response statement R12, ... or user response statement R1t, and cluster 333 of prior user response statements such as user response statement Rk1, user response statement Rk2, ... or user response statement Rks can be a part of prior user response statements 321 provided by a group of users to a set of prior question statements 323. A second data set 325 may be generated by word embedding 320 for prior user response statements 321 and prior question statements 323. Unsupervised machine learning clustering classifier 106 can classify prior user response statements 321 into cluster 331 of prior user response statements and cluster 333 of prior user response statements, based on the second data set 325 generated for prior user response statements 321.

Word embedding 320 is different from sentence embedding 310. With word embedding 320, each word in a vocabulary is shown as a dense vector in a high-dimensional space. The vector stores the word's meaning and how it connects to other words in the vocabulary. Word embedding 320 can be used in natural language processing (NLP) tasks like translating languages, classifying texts, and answering questions. On the other hand, sentence embedding 310 is a technique that represents a whole sentence or a group of words as a single fixed-length vector. Sentence embedding 310 can be used to capture the meaning and context of a sentence, and can be used in tasks such as text classification, sentiment analysis, and text generation. One difference between word embedding 320 and sentence embedding 310 is the level of granularity at which they operate. Word embedding 320 deals with individual words, while sentence embedding 310 deals with complete sentences or groups of words. Another difference is that word embedding 320 can be learned from large amounts of text data. While sentence embedding 310 can be learned either from large amounts of text data or by combining the embedding of individual words in a sentence. In some aspects, sentence embedding, instead of word embedding 320, can be used to generate the second data set 325 for prior user response statements 321 and prior question statements 323 using unsupervised machine learning clustering classifier 106.

In some aspects, word embedding 320 is used to generate the second data set 325 to be provided to unsupervised machine learning clustering classifier 106. Sentence embedding 310 is used to generate the first data set 311 to be provided to supervised machine learning clustering classifier 104. Hence, supervised machine learning clustering classifier 104, unsupervised machine learning clustering classifier 106, word embedding 320, and sentence embedding 310 are combined in a specific way to improve the functioning of the computer, particularly the accuracy of classifying user response statement 143. By using word embedding 320 with unsupervised machine learning clustering classifier 106, due to the smaller granularity of word embedding, unsupervised machine learning clustering classifier 106 can generate a relatively more complete classes, which improves the functions of the unsupervised machine learning clustering classifier 106. By using sentence embedding 310 with supervised machine learning clustering classifier 104, due to the ability of sentence embedding 310 in capturing the meaning and context of a sentence, supervised machine learning clustering classifier 104 can perform more accurate classification of user response statement 143 and question statement 141, which further improves the functions of supervised machine learning clustering classifier 104.

In some aspects, user response statement 143 and the plurality of prior user response statements 321 can be user response statements to an open-ended survey question statement, and question statement 141 and the set of prior question statements 323 are open-ended survey question statements. In some aspects, user response statement 143, question statement 141, the plurality of prior user response statements 321, and the set of prior question statements 323 can include a sequence of response statements and questions obtained in a user interview.

In some aspects, supervised machine learning classifier 104 can include a supervised neutral network, a support vector machine (SVM) classifier, a random forest classifier, or a K nearest neighbors supervised machine learning classifier, where K is an integer.

In some aspects, unsupervised machine learning clustering classifier 106 can include an Ordering Points To Identify the Clustering Structure (OPTICS) algorithm 326, a density-based cluster ordering algorithm, or a Density-Based Spatial Clustering of Applications with Noise (DBSCAN) algorithm. Unsupervised machine learning clustering classifier 106 can include the OPTICS algorithm 326, and further include an agglomerative clustering algorithm 328 to classify noises that the OPTICS clustering algorithm 326 cannot classify with enough confidence.

In some aspects, the first data set 311 can be generated by sentence embedding 310 of user response statement 143 and question statement 141. The sentence embedding 310 can include SentenceBERT, Universal Sentence Encoder, FastText, or a conditional masked language modelling.

In some aspects, the second data set 325 can be generated by word embedding 320 for the plurality of prior user response statements 321 and the set of prior question statements 323. For example, the word embedding 320 includes Word2vec embedding. In some aspects, the word embedding 320 can further include truncated embedding to reduce a dimensionality of the word embedding to generate the second data set.

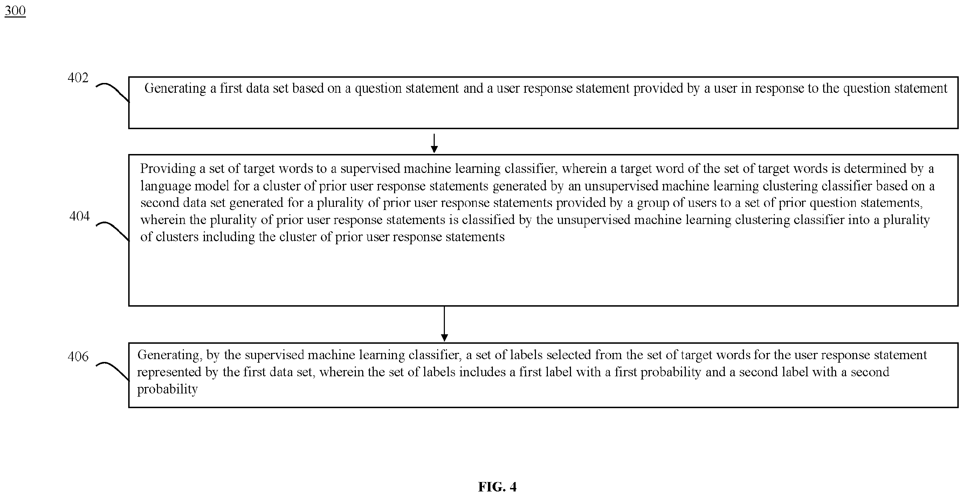

FIG. 4 is a flowchart illustrating an example process for classifying user response statements to survey questions by using a supervised machine learning classifier and an unsupervised machine learning clustering classifier, according to some embodiments. Process 400 can be performed by processing logic that can comprise hardware (e.g., circuitry, dedicated logic, programmable logic, microcode, etc.), software (e.g., instructions executing on a processing device), or a combination thereof. In some aspects, process 400 may operate across multiple different computing devices simultaneously, or in parallel, thus reducing the amount of time that may be used for operations shown in process 400. It is to be appreciated that not all steps may be needed to perform the disclosure provided herein. Further, some of the steps may be performed simultaneously, or in a different order than shown in FIG. 4, as will be understood by a person of ordinary skill in the art. Process 400 are described with reference to FIGS. 1-3. However, process 400 is not limited to that example embodiment.

In step 402, the first data set 311 can be generated based on question statement 141 and user response statement 143 provided by a user in response to question statement 141. The first data set 311 can be generated by sentence embedding 310 of the user response statement and the question statement, and the sentence embedding 310 includes SentenceBERT, Universal Sentence Encoder, FastText, or a conditional masked language modelling. The first data set 311 can be provided as inputs to supervised machine learning classifier 104.

In step 404, language model 309 provides the set of target words 332 to supervised machine learning classifier 104. A target word of the set of target words 332 can be determined by language model 309 for a cluster of prior user response statements, such as cluster 331 of prior user response statements. Cluster 331 of prior user response statements can be generated by unsupervised machine learning clustering classifier 106 based on the second data set 325, which can be generated for a plurality of prior user response statements 321 provided by a group of users to a set of prior question statements 323. Unsupervised machine learning clustering classifier 106 can classify the plurality of prior user response statements 321 into a plurality of clusters including cluster 331 of prior user response statements, cluster 333 of prior user response statements, and other clusters.

In step 406, supervised machine learning classifier 104 generates a set of labels selected from the set of target words 332 for the user response statement 143 represented by the first data set 311. The set of labels can include the first label 145 with a first probability and the second label 147 with a second probability. In some aspects, supervised machine learning classifier 104 can include a supervised neutral network, a support vector machine (SVM) classifier, a random forest classifier, or a K nearest neighbors supervised machine learning classifier.

### Second Multimedia Environment

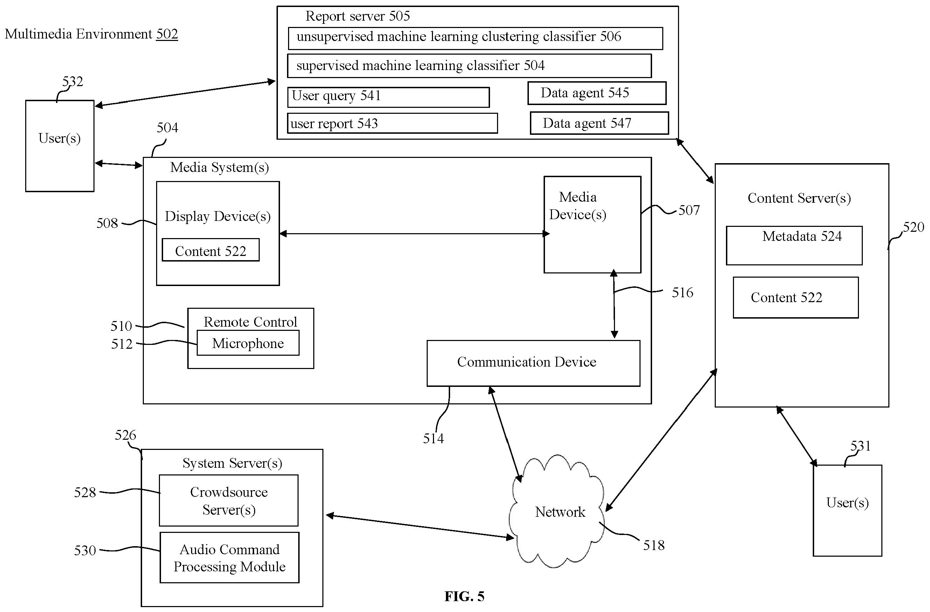

FIG. 5 illustrates a block diagram of a multimedia environment 502 including a server for managing user reports, according to some embodiments. In a non-limiting example, multimedia environment 502 may be directed to streaming media. However, this disclosure is applicable to any type of media (instead of or in addition to streaming media), as well as any mechanism, means, protocol, method and/or process for distributing media.

The multimedia environment 502 may include one or more media systems 504. A media system 504 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. Users 532 may operate with the media system 504 to select and consume content, such as media content 522, which may also be referred to as a content item.

Each media system 504 may include one or more media devices 507 each coupled to one or more display devices 508. It is noted that terms such as "coupled," "connected to," "attached," "linked," "combined" and similar terms may refer to physical, electrical, magnetic, logical, etc., connections, unless otherwise specified herein.

Media device 507 may be a streaming media device, DVD or BLU-RAY device, audio/video playback device, cable box, and/or digital video recording device, to name just a few examples. Display device 508 may be a monitor, television (TV), computer, smart phone, tablet, wearable (such as a watch or glasses), appliance, internet of things (IoT) device, and/or projector, to name just a few examples. In some aspects, media device 507 can be a part of, integrated with, operatively coupled to, and/or connected to its respective display device 508.

Each media device 507 may be configured to communicate with network 518 via a communication device 514. The communication device 514 may include, for example, a cable modem, a cellular modem, a WiFi modem, any other wireless modem, or satellite TV transceiver. The media device 507 may communicate with the communication device 514 over a link 516, wherein the link 516 may include wireless (such as WiFi) and/or wired connections.

In various embodiments, the network 518 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 504 may include a remote control 510. The remote control 510 can be any component, part, apparatus and/or method for controlling the media device 507 and/or display device 508, such as a remote control, a tablet, laptop computer, smartphone, wearable, on-screen controls, integrated control buttons, audio controls, or any combination thereof, to name just a few examples. In an embodiment, the remote control 510 wirelessly communicates with the media device 507 and/or display device 508 using cellular, Bluetooth, infrared, etc., or any combination thereof. The remote control 510 may include a microphone 512, which is further described below.

The multimedia environment 502 may include a plurality of content servers 520 (also called content providers, channels or sources 520). Although only one content server 520 is shown in FIG. 5, in practice the multimedia environment 502 may include any number of content servers 520. Each content server 520 may be configured to communicate with network 518.

Each content server 520 may store content 522 and metadata 524. Content 522 may include multiple content items, which may be any combination of music, videos, movies, TV programs, multimedia, images, still pictures, text, graphics, gaming applications, advertisements, programming content, public service content, government content, local community content, software, and/or any other content or data objects in electronic form.

In some aspects, metadata 524 comprises data about content 522. For example, metadata 524 may include associated or ancillary information indicating or related to writer, director, producer, composer, artist, actor, summary, chapters, production, history, year, trailers, alternate versions, related content, applications, and/or any other information pertaining or relating to the content 522. Metadata 524 may also or alternatively include links to any such information pertaining or relating to the content 522. Metadata 524 may also or alternatively include one or more indexes of content 522, such as but not limited to a trick mode index.

In some aspects, content server 520 may also store information about the community of users 531, which can include user(s) 532.

In some aspects, the multimedia environment 502 may include a server 505 that can interact with user 532 or the community of users 531 through an application software operated by server 505, such as a web browser. Server 505 can provide a user query 541 or a user report 543. User query 541 may be simply referred to as a query. In some aspects, user report 543 and user query 541 can be related to providing content 522 to user 532 through multimedia environment 502. Server 505 can be different from content server 520, and can be operated by different owners. In addition, server 505 can operate a supervised machine learning classifier 504 and an unsupervised machine learning clustering classifier 506. Unsupervised machine learning clustering classifier 506 can provide a set of data agents including a data agent 545 and a data agent 547 to supervised machine learning classifier 504. Supervised machine learning classifier 504 can determine user report 543 is classified into a database managed by data agent 545. In addition, supervised machine learning classifier 504 can determine that user query 541 corresponds to data agent 547 including a description of user reports in a database managed by the second data agent 547.

The multimedia environment 502 may include one or more system servers 526. The system servers 526 may operate to support the media devices 506 from the cloud. It is noted that the structural and functional aspects of the system servers 526 may wholly or partially exist in the same or different ones of the system servers 526.

The media devices 506 may exist in thousands or millions of media systems 504. Accordingly, the media devices 506 may lend themselves to crowdsourcing embodiments and, thus, the system servers 526 may include one or more crowdsource servers 528.

For example, using information received from the media devices 506 in the thousands and millions of media systems 504, the crowdsource server(s) 528 may identify similarities and overlaps between closed captioning requests issued by different users 532 watching a particular movie. Based on such information, the crowdsource server(s) 528 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 528 may operate to cause closed captioning to be automatically turned on and/or off during future streaming of the movie.

The system servers 526 may also include an audio command processing module 530. As noted above, the remote control 510 may include a microphone 512. The microphone 512 may receive audio data from users 532 (as well as other sources, such as the display device 508). In some aspects, the media device 507 may be audio responsive, and the audio data may represent verbal commands from the user 532 to control the media device 507 as well as other components in the media system 504, such as the display device 508.

In some aspects, the audio data received by the microphone 512 in the remote control 510 is transferred to the media device 507, which is then forwarded to the audio command processing module 530 in the system servers 526. The audio command processing module 530 may operate to process and analyze the received audio data to recognize the verbal command of user 532. The audio command processing module 530 may then forward the verbal command back to the media device 507 for processing.

### Managing user reports

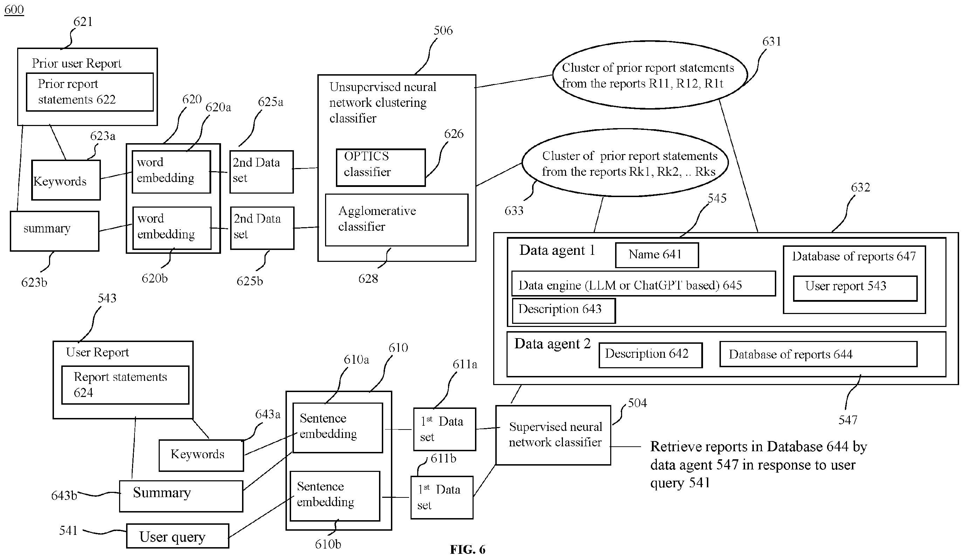

FIG. 6 is a block diagram illustrating a system 600 for managing user reports by a supervised machine learning classifier and an unsupervised machine learning clustering classifier, according to some example embodiments. System 600 may be operated by server 505 to manage user reports by supervised machine learning classifier 504 and unsupervised machine learning clustering classifier 506.

In some aspects, system 600 can include a plurality of prior user reports 621. A prior user report can be a user report being generated before user report 543 is generated. In some aspects, user report 543 may be referred to as a current user report. The plurality of prior user reports 621 can include multiple prior report statements 622, and user report 543 can include multiple report statements 624. User report 543 or a prior user report can be a document larger than a single statement, such as a question statement or a user response statement which can be a single statement. Instead, user report 543 or a prior user report can include thousands or even millions of report statements 624 or prior report statements 622. User report 543 or a prior user report can include the content of a computer file in various formats, such as a Microsoft Word format, text format, portable document format (PDF), Microsoft PowerPoint Presentation (PPT) format, or any other computer recognizable format. User report 543 or a prior user report can be a report generated by a vendor or a user to answer some specific questions of interests, such as an open-ended survey question statement, e.g., user query 541. In some aspects, user report 543 can include a list of keywords 643a, such as 5 to 10 keywords, and a summary 643b of user report 543. Similarly, the plurality of prior user reports 621 can include a set of keywords 623a and a set of summaries 623b corresponding to the plurality of prior user reports 621, where each prior user report can include a list of keywords and a summary. The list of keywords 643a, summary 643b, the set of keywords 623a, and the set of summaries 623b may be include in user report 543 or the plurality of prior user reports 621 respectively, or generated afterwards manually or by system 600 using other tools such as a language model.

In some aspects, user query 541 can be an open-ended survey question statement. In general, a survey question statement can be an open-ended survey question statement or a closed or fixed response question. For example, a survey question can be a yes or no, a true or false question, a multiple choice question, a rating scale question, or a ranking question, which are examples of closed or fixed response question. An open-ended survey question can be a general sentence, such as "what is your favorite color"? "What is your opinion about the interest rate increase"? An open-ended survey question can solicit free style answers from a user, which can potentially contain more information.

In some aspects, when user report 543 is provided, system 600 can determine, by supervised machine learning classifier 504, user report 543 is classified into a database, such as a database 647 managed by data agent 545. In some other embodiments, when user query 541 is provided, system 600 can determine, by supervised machine learning classifier 504, that user query 541 corresponds to data agent 547 including a description 642 of user reports in a database 644 managed by data agent 547. In addition, system 600 can retrieve, by supervised machine learning classifier 504, description 642 and user reports in database 644 in response to user query 541. Accordingly, data agent 547 and its description 642 or user reports in database 644 may provide information answers to user query 541.

In some aspects, data agent 545 can include a name 641, a description 643, a data engine 645, and database of reports 647. Data engine 645 can include a language model, such as GPT3.5, which can be a probabilistic language model or a neural network based language model. Name 641 and description 643 can be generated by data engine 645 or the language model. Description 643 can be a summary or description of user reports included in database 647 managed by data agent 545. Similarly, data agent 547 can include description 642, database of reports 644, a name, a data engine, and any other related components.

In some aspects, data agent 545 and data agent 547 can be included in a set of data agents 632 determined for a plurality of clusters of prior report statements, such as a cluster of prior report statements 631, or a cluster of prior report statements 633. The set of data agents 632 can be provided to supervised machine learning classifier 504 for the determination of user report 543 being classified into database 647 managed by data agent 545, or user query 541 corresponds to data agent 547. There can be more than one or two data agents in the set of data agents 632 to be provided to supervised machine learning classifier 504, while supervised machine learning classifier 504 can determine which data agent of the set of data agents 632 corresponds to user report 543 or user query 541.

In some aspects, a cluster of prior report statements, such as cluster of prior report statements 631, or cluster of prior report statements 633, can be generated by unsupervised machine learning clustering classifier 506 based on one or more data sets, such as a data set 625a, a data set 625b, generated for the plurality of prior user reports 621. In some aspects, data set 625a can be generated by word embedding 620a for the set of keywords 623a of the plurality of prior user reports 621, and data set 625b can be generated by word embedding 620b for the set of summaries 623 b corresponding to the plurality of prior user reports 621. Unsupervised machine learning clustering classifier 506 can classify the plurality of prior user reports 621 into a plurality of clusters of prior report statements, such as cluster of prior report statements 631, cluster of prior report statements 633, or other clusters. Cluster of prior report statements 631 can include multiple prior report statements, such as prior report statement R11, prior report statement R12, ... or prior report statement R1t, and cluster of prior report statements 633 can include multiple prior report statements, such as prior report statement Rk1, prior report statement Rk2, ... or prior report statement Rks, which can be a part of the plurality of prior user reports 621 provided by a group of users. In some aspects, prior report statement R11 and prior report statement R12 of cluster of prior report statements 631 can be extracted from different prior user reports of the plurality of prior user reports 621. For example, prior report statement R11 is included in a first prior user report, and prior report statement R12 is included in a second prior user report different from the first prior user report. In some aspects, prior report statement R11 and prior report statement R12 can be extracted from the same user report.

In some aspects, a data agent of the set of data agents 632, such as data agent 545, data agent 547, or other data agents, can be determined by language model included in the corresponding data engine. For example, data agent 545 can be determined by data engine 645. Language model included in data engine 645 can be a probabilistic language model or a neural network based language model. In some aspects, a language model, such as GPT3.5, can be used to generate the description such as description 643 for data agent 545.

In some aspects, supervised machine learning classifier 504 can receive as input a first data set 611a generated by sentence embedding 610a of the list of keywords 643a and summary 643b and determine that user report 543 is classified into database 647 managed by data agent 545. Similarly, supervised machine learning classifier 504 can receive as input a first data set 611b generated by sentence embedding 610b of user query 541 and determine that user query 541 corresponds to data agent 547 including description 642 of user reports in a database 644 managed by data agent 547.

Accordingly, the use of word embedding 620a and word embedding 620b with unsupervised machine learning clustering classifier 506 and the use of sentence embedding 610a and sentence embedding 610b with supervised machine learning classifier 504 is a specific combination that can improve the functionality of the known techniques by using supervised machine learning classifier 504 or unsupervised machine learning clustering classifier 506 alone. In some aspects, sentence embedding 610a or sentence embedding 610b can include SentenceBERT, Universal Sentence Encoder, FastText, or a conditional masked language modelling. In some aspects, word embedding 620a or word embedding 620b can include Word2vec embedding. In some aspects, word embedding 620a or word embedding 620b can further include truncated embedding to reduce a dimensionality of the word embedding to generate the second data set.

In practice, in the process of classifying user report 543 or user query 541, tagging or labeling of report statements 624 of user report 543 or query 541 can be performed by using supervised machine learning classifier 504 or unsupervised machine learning clustering classifier 506 alone. In some aspects, supervised machine learning classifier 504 and unsupervised machine learning clustering classifier 506 can be machine learning based classifier. Accordingly, such machine learning based classifiers are a kind of specific classifier instead of a generic tool for doing any classification, and cannot be performed by hand or using a mental process. Both supervised machine learning classifier 504 and unsupervised machine learning clustering classifier 506 can recognize patterns, either by relying on previous experience (e.g., supervised machine learning classifier 504), or without any a priori knowledge of the system itself (e.g., unsupervised machine learning clustering classifier 506). However, supervised machine learning classifier 504 alone needs very clear training process, while the unrepresented place in training data is difficult to be recognized by supervised machine learning classifier 504. Unsupervised machine learning clustering classifier 506 alone cannot estimate or map the outcome of an individual sample. In the presence of outliers, the outcome produced by unsupervised machine learning clustering classifier 506 can vary greatly. Therefore, by combining supervised machine learning classifier 504 and unsupervised machine learning clustering classifier 506 together, system 600 can improve the functionality of either supervised machine learning classifier 504 or unsupervised machine learning clustering classifier 506 if used alone. In some aspects, supervised machine learning classifier 504 or unsupervised machine learning clustering classifier 506 can be implemented by a neural network having multiple layers, such as an input layer, a hidden layer, and an output layer. In some aspects, supervised machine learning classifier 504 or unsupervised machine learning clustering classifier 506 can be implemented by custom hardware, or a combination of hardware and software. System 600 can improve the functionality of either supervised machine learning classifier 504 or unsupervised machine learning clustering classifier 506 so that they can be used to classify many kinds of data. The use of system 600 to classify user report 543 or user query 541 is only presented as an example of applications for system 600.

In some aspects, supervised machine learning classifier 504 can include a supervised neutral network, a support vector machine (SVM) classifier, a random forest classifier, or a K nearest neighbors supervised machine learning classifier, where K is an integer.

In some aspects, unsupervised machine learning clustering classifier 506 can include an Ordering Points To Identify the Clustering Structure (OPTICS) algorithm 626, a density-based cluster ordering algorithm, or a Density-Based Spatial Clustering of Applications with Noise (DBSCAN) algorithm. Unsupervised machine learning clustering classifier 506 can include the OPTICS algorithm 626, and further include an agglomerative clustering algorithm 628 to classify noises that the OPTICS clustering algorithm 626 cannot classify with enough confidence.

In some aspects, word embedding 620a or word embedding 620b, which can be collectively referred to as word embedding 620, can be different from sentence embedding 610a or sentence embedding 610b, which can be collectively referred to as sentence embedding 610. With word embedding 620, each word in a vocabulary is shown as a dense vector in a high-dimensional space. The vector stores the word's meaning and how it connects to other words in the vocabulary. Word embedding 620 can be used in natural language processing (NLP) tasks like translating languages, classifying texts, and answering questions. On the other hand, sentence embedding 610 is a technique that represents a whole sentence or a group of words as a single fixed-length vector. Sentence embedding 610 can be used to capture the meaning and context of a sentence, and can be used in tasks such as text classification, sentiment analysis, and text generation. One difference between word embedding 620 and sentence embedding 610 is the level of granularity at which they operate. Word embedding 620 deals with individual words, while sentence embedding 610 deals with complete sentences or groups of words. Another difference is that word embedding 620 can be learned from large amounts of text data. While sentence embedding 610 can be learned either from large amounts of text data or by combining the embedding of individual words in a sentence. In some aspects, sentence embedding, instead of word embedding 620, can be used to generate the second data set 625 for prior user response statements 621 and prior question statements 623 using unsupervised machine learning clustering classifier 506.

In some aspects, word embedding 620 is used to generate the second data set 625a or second data set 625b to be provided to unsupervised machine learning clustering classifier 506. Sentence embedding 610 is used to generate the first data set 611a or the first data set 611b to be provided to supervised machine learning clustering classifier 504. Hence, supervised machine learning clustering classifier 504, unsupervised machine learning clustering classifier 506, word embedding 620, and sentence embedding 610 are combined in a specific way to improve the functioning of the computer, particularly the accuracy of classifying user report 543. By using word embedding 620 with unsupervised machine learning clustering classifier 506, due to the smaller granularity of word embedding, unsupervised machine learning clustering classifier 506 can generate a relatively more complete classes, which improves the functions of the unsupervised machine learning clustering classifier 506. By using sentence embedding 610 with supervised machine learning clustering classifier 504, due to the ability of sentence embedding 610 in capturing the meaning and context of a sentence, supervised machine learning clustering classifier 504 can perform more accurate classification of user report 543 and user query 541, which further improves the functions of supervised machine learning clustering classifier 504.

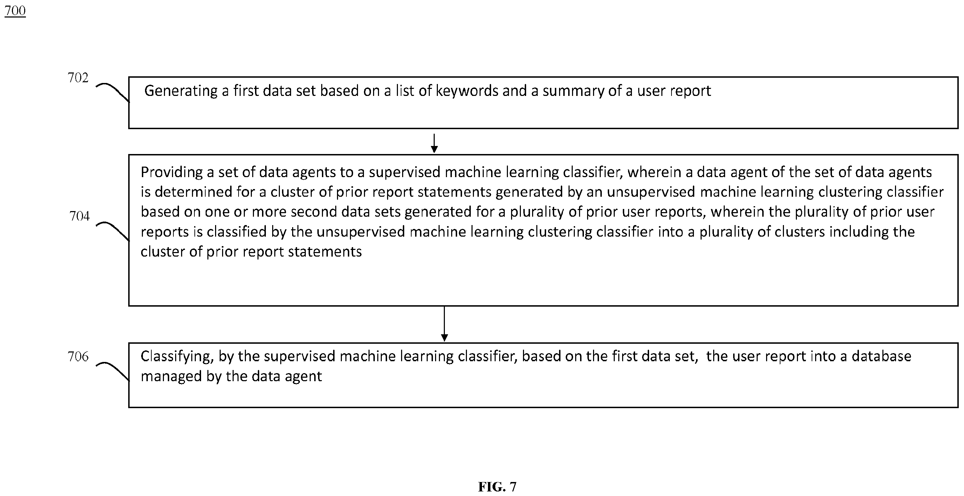

FIG. 7 is a flowchart illustrating an example process 700 for managing user reports by using a supervised machine learning classifier and an unsupervised machine learning clustering classifier, according to some embodiments. Process 700 can be performed by processing logic that can comprise hardware (e.g., circuitry, dedicated logic, programmable logic, microcode, etc.), software (e.g., instructions executing on a processing device), or a combination thereof. In some aspects, process 700 may operate across multiple different computing devices simultaneously, or in parallel, thus reducing the amount of time that may be used for operations shown in process 700. It is to be appreciated that not all steps may be needed to perform the disclosure provided herein. Further, some of the steps may be performed simultaneously, or in a different order than shown in FIG. 7, as will be understood by a person of ordinary skill in the art. Process 700 are described with reference to FIGS. 5-6. However, process 700 is not limited to that example embodiment.

In step 702, the first data set 611a can be generated based on the list of keywords 643a and summary 643b of user report 543. The first data set 611a can be generated by sentence embedding 610 of the list of keywords 643a and summary 643b of user report 543, and the sentence embedding 610a includes SentenceBERT, Universal Sentence Encoder, FastText, or a conditional masked language modelling. The first data set 611a can be provided as inputs to supervised machine learning classifier 504. Similarly, the first data set 611b based on user query 541 can be generated.

In step 704, the set of data agents 632 can be provided to supervised machine learning classifier 504. Data agent 545 of the set of data agents 632 can be determined for the cluster of prior report statements 631 generated by unsupervised machine learning clustering classifier 506 based on one or more second data sets 625a or 625b generated for the plurality of prior user reports 621. The plurality of prior user reports 621 can be classified by unsupervised machine learning clustering classifier 506 into a plurality of clusters including the cluster of prior report statements, such as the cluster of prior report statements 631 or the cluster of prior report statements 633.

In step 706, supervised machine learning classifier 504 can classify user report 543 for storage into database 647 managed by data agent 545. In some aspects, supervised machine learning classifier 504 can include a supervised neutral network, a support vector machine (SVM) classifier, a random forest classifier, or a K nearest neighbors supervised machine learning classifier. Similarly, supervised machine learning classifier 504 can determine that user query 541 corresponds to data agent 547 including a description 642 of user reports in a database 644 managed by data agent 547.

### Example Computer System

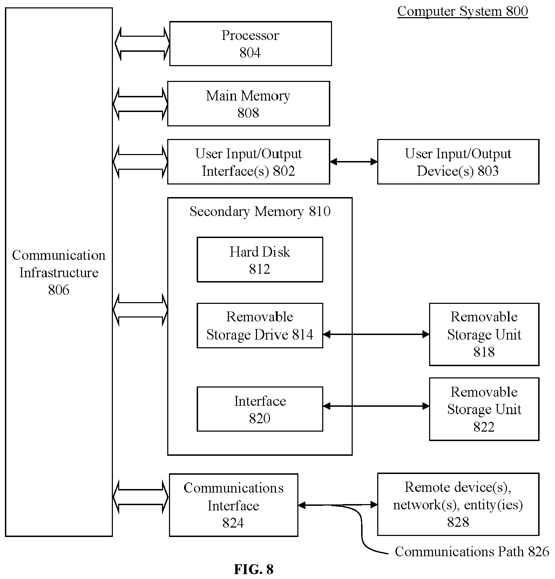

Various embodiments may be implemented, for example, using one or more well-known computer systems, such as computer system 800 shown in FIG. 8. For example, media device 107, display device 108, server 105, content server 120, system server 126, system 300, media device 507, display device 508, server 505, content server 520, system server 526, system 600, may be implemented using combinations or sub-combinations of computer system 800 to perform various functions described herein, e.g., by process 400 performed by system 300, as shown in FIGS. 3-4, or process 700 performed by system 600, as shown in FIGS. 6-7. Also or alternatively, one or more computer systems 800 may be used, for example, to implement any of the embodiments discussed herein, as well as combinations and sub-combinations thereof.

Computer system 800 may include one or more processors (also called central processing units, or CPUs), such as a processor 804. Processor 804 may be connected to a communication infrastructure or bus 806.

Computer system 800 may also include user input/output device(s) 803, such as monitors, keyboards, pointing devices, etc., which may communicate with communication infrastructure 806 through user input/output interface(s) 802.

One or more of processors 804 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 may also include a main or primary memory 808, such as random access memory (RAM). Main memory 808 may include one or more levels of cache. Main memory 808 may have stored therein control logic (i.e., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 may include a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 may read from and/or write to removable storage unit 818.

Secondary memory 810 may include other means, devices, components, instrumentalities or other approaches for allowing computer programs and/or other instructions and/or data to be accessed by computer system 800. Such means, devices, components, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 800 may further include a communication or network interface 824. Communication interface 824 may enable computer system 800 to communicate and interact with any combination of external devices, external networks, external entities, etc. (individually and collectively referenced by reference number 828). For example, communication interface 824 may allow computer system 800 to communicate with external or remote devices 828 over communications path 826, which may be wired and/or wireless (or a combination thereof), and which may include any combination of LANs, WANs, the Internet, etc. Control logic and/or data may be transmitted to and from computer system 800 via communication path 826.

Computer system 800 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 800 may be a client or server, accessing or hosting any applications and/or data through any delivery paradigm, including but not limited to remote or distributed cloud computing solutions; local or on-premises software ("on-premise" cloud-based solutions); "as a service" models, e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 800 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some aspects, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 800, main memory 808, secondary memory 810, and removable storage units 818 and 822, as well as tangible articles of manufacture embodying any combination of the foregoing. Such control logic, when executed by one or more data processing devices (such as computer system 800 or processor(s) 804), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 8. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for managing user reports, comprising:
generating, by at least one computer processor, a first data set based on a list of keywords and a summary of a user report;
providing a set of data agents to a supervised machine learning classifier, wherein a data agent of the set of data agents is determined for a cluster of prior report statements generated by an unsupervised machine learning clustering classifier based on one or more second data sets generated for a plurality of prior user reports, wherein the plurality of prior user reports is classified by the unsupervised machine learning clustering classifier into a plurality of clusters including the cluster of prior report statements; and
classifying, by the supervised machine learning classifier, based on the first data set, the user report into a database managed by the data agent.

2. The computer-implemented method of claim 1, wherein the data agent includes a description of user reports included in the database managed by the data agent, and the description of user reports is determined by a language model for the cluster of prior report statements.

3. The computer-implemented method of claim 2, wherein the language model includes a probabilistic language model or a neural network based language model.

4. The computer-implemented method of claim 2, wherein the data agent is a first data agent, and the method further comprises:
receiving a user query; and
determining, by the supervised machine learning classifier, that the user query corresponds to a second data agent including a second description of user reports in a second database managed by the second data agent.

5. The computer-implemented method of claim 1, wherein the one or more second data sets are generated by word embedding for a set of keywords and a set of summaries corresponding to the plurality of prior user reports, optionally wherein the word embedding further includes truncated embedding to reduce a dimensionality of the word embedding to generate the second data set.

6. The computer-implemented method of claim 1, wherein the first data set is generated by sentence embedding of the list of keywords and the summary of the user report, and wherein the sentence embedding includes SentenceBERT, Universal Sentence Encoder, FastText, or a conditional masked language modelling.

7. A system, comprising:
one or more memories configured to store a plurality of prior user reports including multiple prior report statements; and
at least one processor coupled to the one or more memories and configured to perform operations comprising:
generating a first data set based on a list of keywords and a summary of a user report;
providing a set of data agents to a supervised machine learning classifier, wherein a data agent of the set of data agents is determined for a cluster of prior report statements generated by an unsupervised machine learning clustering classifier based on one or more second data sets generated for the plurality of prior user reports, wherein the plurality of prior user reports is classified by the unsupervised machine learning clustering classifier into a plurality of clusters including the cluster of prior report statements; and
classifying, by the supervised machine learning classifier, based on the first data set, the user report into a database managed by the data agent.

8. The system of claim 7, wherein the data agent includes a description of user reports included in the database managed by the data agent, and the description of user reports is determined by a language model for the cluster of prior report statements.

9. The system of claim 8, wherein the language model includes a probabilistic language model or a neural network based language model.

10. The system of claim 8, wherein the data agent is a first data agent, and the operations further comprising:
receiving a user query; and
determining, by the supervised machine learning classifier, that the user query corresponds to a second data agent including a second description of user reports in a second database managed by the second data agent.

11. The system of claim 8, wherein:
the one or more second data sets are generated by word embedding for a set of keywords and a set of summaries corresponding to the plurality of prior user reports; and/or
the supervised machine learning classifier includes a supervised neutral network, a support vector machine (SVM) classifier, a random forest classifier, or a K nearest neighbors supervised machine learning classifier; and/or
the unsupervised machine learning clustering classifier includes an Ordering Points To Identify the Clustering Structure (OPTICS) algorithm, a density-based cluster ordering algorithm, or a Density-Based Spatial Clustering of Applications with Noise (DBSCAN) algorithm.

12. A non-transitory computer-readable medium having instructions stored thereon that, when executed by at least a computing device, cause the computing device to perform operations comprising:
generating a first data set based on a list of keywords and a summary of a user report;
providing a set of data agents to a supervised machine learning classifier, wherein a data agent of the set of data agents is determined for a cluster of prior report statements generated by an unsupervised machine learning clustering classifier based on one or more second data sets generated for a plurality of prior user reports, wherein the plurality of prior user reports is classified by the unsupervised machine learning clustering classifier into a plurality of clusters including the cluster of prior report statements; and
classifying, by the supervised machine learning classifier, based on the first data set, the user report into a database managed by the data agent.

13. The non-transitory computer-readable medium of claim 12, wherein the data agent includes a description of user reports included in the database managed by the data agent, and the description of user reports is determined by a language model for the cluster of prior report statements, and wherein the language model includes a probabilistic language model or a neural network based language model.

14. The non-transitory computer-readable medium of claim 12, wherein the data agent is a first data agent, and the operations further comprising:
receiving a user query; and
determining, by the supervised machine learning classifier, that the user query corresponds to a second data agent including a second description of user reports in a second database managed by the second data agent.

15. The non-transitory computer-readable medium of claim 12, wherein:
the one or more second data sets are generated by word embedding for a set of keywords and a set of summaries corresponding to the plurality of prior user reports; and/or
the supervised machine learning classifier includes a supervised neutral network, a support vector machine (SVM) classifier, a random forest classifier, or a K nearest neighbors supervised machine learning classifier; and/or
the unsupervised machine learning clustering classifier includes an Ordering Points To Identify the Clustering Structure (OPTICS) algorithm, a density-based cluster ordering algorithm, or a Density-Based Spatial Clustering of Applications with Noise (DBSCAN) algorithm.
